# EUROPEAN PATENT SPECIFICATION

(11) **EP 0 542 017 B1**
(45) Date of publication and mention of the grant of the patent: **08.05.1996**
(21) Application number: 92118249.9
(22) Date of filing: 24.10.1992
(51) Int. Cl.: B60R 9/058

(54) **Improvements to load carriers**
Verbesserungen bei Lastträgern
Améliorations à des porteurs de charges

(30) Priority: 13.11.1991 SE 9103339
(43) Date of publication of application: 19.05.1993
(73) Proprietor: Industri AB Thule, S-330 33 Hillerstorp (SE)
(72) Inventor: Christiansson, Magnus, S-335 93 Asenhöga (SE)
(74) Representative: Wallengren, Yngvar

(56) References cited:
- EP-A- 0 283 208
- WO-A-89/04775
- DE-A- 3 626 479
- DE-C- 3 004 919

## Description

### TECHNICAL FIELD

The present invention relates to a load carrier foot of the type which is intended to be secured at the side edge regions of a vehicle roof for mounting a load carrier extending transversely across the vehicle roof, comprising a support member for abutment against the roof and a clamping member for fixedly clamping the load carrier foot, said support member and said clamping member being provided on a carriage element provided in the load carrier foot, said carriage element being movable in a clamping movement under influence of a clamping arrangement toward a longitudinal center line of the vehicle.

### BACKGROUND ART

Numerous different variations of load carrier feet of the type mentioned by way of introduction are known in the art. Thus, there are load carrier feet intended for vehicles with drip gutters. The support portion is rigidly secured in these or constitutes a part of the load carrier foot proper, while the clamping portion is movable in substantially a vertical direction, possibly somewhat obliquely inwards over the vehicle roof.

In such load carrier feet as are intended for vehicles without gutters, the support portion is, as a rule, pivotally secured in the load carrier foot such that it will be capable of being aligned in dependence upon the slope of the vehicle roof. Here, the clamping portion is in the form of a catch which is retractable in a direction obliquely inwards and over the vehicle roof. The angle of inclination of the clamping direction of the clamping portion may vary between an almost vertical clamping direction and a largely horizontal clamping direction.

EP 283 208 discloses a load carrier of this basic type. In this load carrier a carrier foot has, at its lower end, pivotably fastened thereto a support pad. This pad has a slot like opening for receiving a clamping hook which is under influence of an operating device provided in the support pad.

Common to all of the above-considered designs and constructions is that the direction of movement of the clamping portion is such that a component of the movement implies that the clamping portion is brought closer to the support portion.

From WO 89/04775, a design is also previously known in which the clamping member and the support member execute the mutually converging movement at the same time as both parts are displaced inwards towards the centre line of the vehicle roof.

In such vehicle body types as require that the clamping portion for fixedly clamping the load carrier foot move in a direction which is as good as horizontal or which makes but a small angle with the horizontal plane, extremely large shearing forces occur in all of the above-considered designs between the support portion and that part of the vehicle roof against which the support portion abuts. As a result of this considerable shearing force which is resiliently absorbed through the rubber coating of the support portion, a substantial proportion of the clamping force in the clamping portion is lost.

There is also previously known load carriers having a support pad and a clamping hook arranged as portions of a member which, under influence of a clamping device is drawn towards a longitudinal center line of the vehicle.

According to DE 3 004 919 the clamping hook and the support pad are arranged directly on the load carrier foot which, under influence of a screw, could be displaced horizontally towards the center line of the vehicle.

According to DE 3 626 479 an upper portion of the load carrier foot telescopingly cooperates with the load bar and could, under influence of a screw, be drawn horizontally towards the center line of the vehicle. At the lower end of this foot there is pivotably fastened a lower foot portion having a support pad and a clamping hook.

The load carriers of the above documents suffer from stability problems. Further, as the clamping direction is horizontal and in the longitudinal direction of the load bar the clamping action is inadequate.

### PROBLEM STRUCTURE

The present invention has for its object to devise a load carrier foot of the type mentioned by way of introduction, the load carrier foot being designed in such a manner that it does not suffer from the drawbacks inherent in prior art designs and constructions. In particular, the present invention has for its object to devise a load carrier foot in which a maximum proportion of the available clamping force acts between the clamping portion and that part of the vehicle body against which the clamping portion abuts. The present invention further has for its object to devise a load carrier foot which is simple and economical to manufacture and which affords an extremely reliable fixed retention on the vehicle roof.

### SOLUTION

The objects forming the basis of the present invention are attained if the load carrier foot mentioned by way of introduction is characterized in that the carriage element is in the form of a plate member which, with opposing edge portions, in its clamping movement is displacably guided in corresponding grooves in the load carrier foot.

Since the clamping arrangement synchronously displaces both the support portion and the clamping portion in toward the middle of the vehicle, the support portion and the clamping portion will not be drawn towards one another with resultant shearing forces against the vehicle roof. The maximum proportion of the available clamping force will, therefore, favour the clamping portion.

Further advantages will be attained if the subject matter of the present invention is also given one or more of the characterizing features as set forth in appended Claims 2-8.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: is a side elevation of a load carrier foot at some height above a side edge portion of a vehicle roof;
- Fig. 2: shows a carriage element included in the load carrier foot of Fig. 1, seen transversely of the longitudinal direction of the vehicle;
- Fig. 3: shows the carriage element of Fig. 2 seen straight from above; and
- Fig. 4: is a section approximately along the section line A-A in Fig. 1.

### DESCRIPTION OF PREFERRED EMBODIMENT

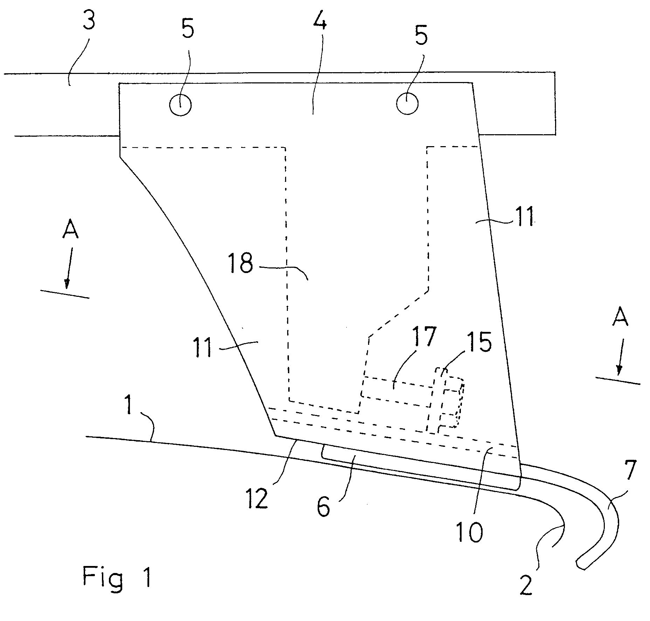

In Fig. 1, reference numeral 1 relates to the contour line of a side edge portion of a vehicle roof. It will be apparent that this edge portion has a powerfully curved region 2 which may possibly be concealed in behind an upper edge portion of a vehicle door. Further, the side edge portion of the vehicle roof is level and inclines but insignificantly upwards towards a longitudinal centre line of the vehicle roof.

A load carrier beam 3 extends over the vehicle roof and has, in each end, a load carrier foot 4. Both of the load carrier feet 4 can, at one or both ends of the load carrier beam 3, be permanently secured therein, for example by rivet jointing or the like.

However, an adjustable securement of at least the one load carrier foot 4 in the longitudinal direction of the load carrier beam 3 entails advantages in that one and the same load carrier may be employed for vehicles of different widths. For example, this may be achieved in that the load carrier foot 4 is provided with pins, stub shafts, screws or similar anchorage members 5 which extend through suitable holes included in a hole series in the load carrier beam 3.

For abutment against the vehicle roof, the load carrier foot 4 has a support portion 6 which may consist of or include a pad or plate made of rubber or other at least partly yieldable material. In the design and construction according to the present invention, it is an advantage if the material in the support portion 6 is selected in such a manner as to provide relatively low friction against the material of the roof.

The load carrier foot 4 is further provided with a clamping portion 7 which is movable under the action of an operating arrangement in order to come into abutment against the side edge portion of the vehicle roof, ideally its curved region 2.

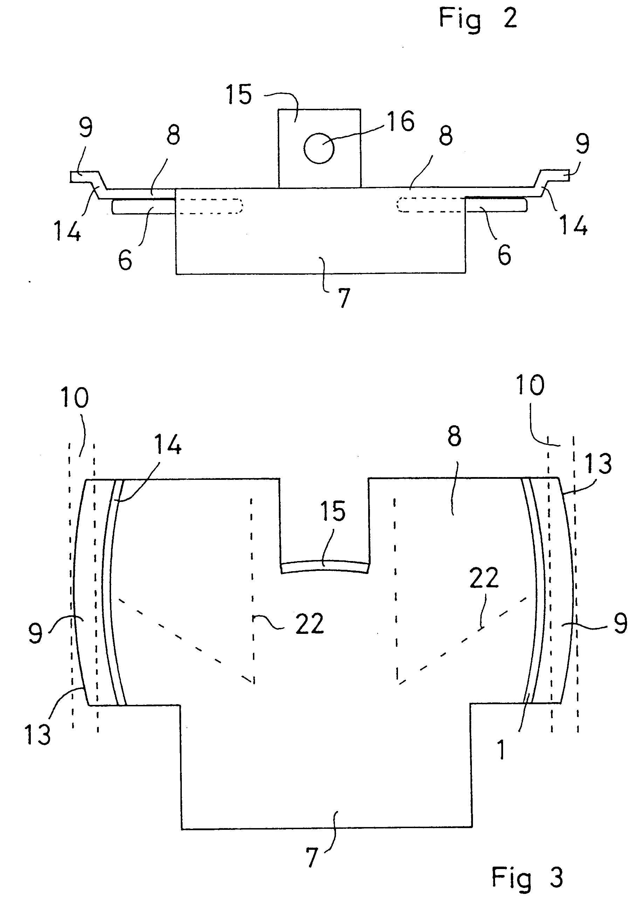

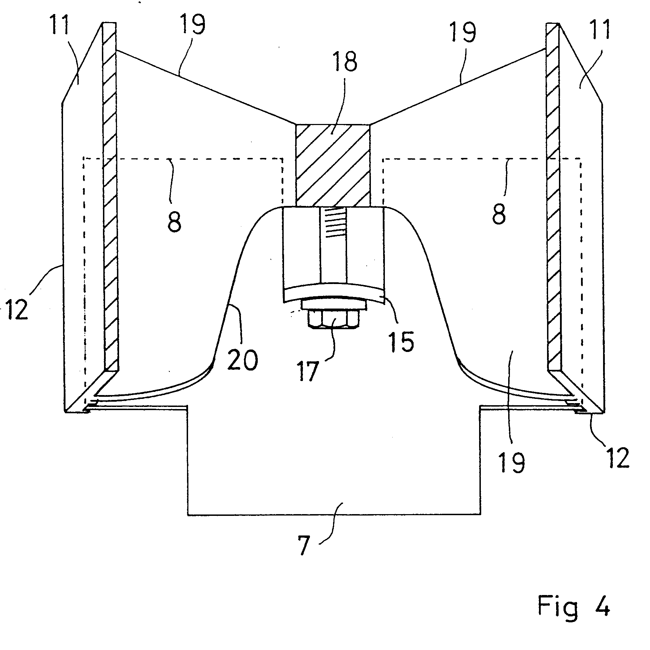

According to the invention, both the support portion 6 and the clamping portion 7 are movable together synchronously inwards towards the longitudinal vehicle centre line or a line located somewhat thereover (how high this line is located depends on the angle of inclination of the edge portion of the vehicle roof). In order to realize this common inward movement, both the support portion 6 and the clamping portion 7 are disposed on a carriage element 8 which is in the form of a plate which, with opposing edge portions 9, is guided in interior grooves 10 mutually facing one another in the side walls 11 of the load carrier foot (front and rear in the vehicle direction). The grooves 10 extend parallel with the lower edge 12 of the side walls 11 and, in Fig. 2, are marked by the broken lines 10. In Fig. 3, the grooves 10 are also intimated by broken lines.

Since, seen straight from above, a vehicle roof need not have any parallel side edges but may have arched side edges or a generally wedge-shaped configuration from above, it is not at all certain that the clamping portions 7 will abut against edge regions 2 of the roof which are parallel with the longitudinal centre line of the vehicle. In order to cater for such an oblique inclination of the clamping portions 7, the opposing edge portions 9 of the carriage element 8 are arched at their end surfaces 13 so that thereby the carriage element 8 can, to some extent (of the order of 10-15°) be rotated about a pivotal axis which is at right angles to the plane of extent of the carriage element 8.

Since the grooves 10 in the side walls 11 of the load carrier foot 4 must have a lower boundary definition, the grooves 10 will be located at some height above the lower edges 12 of the side walls 11. In order to avoid the risk that the lower edges 12 prevent the proper abutment of the support portions 6 against the vehicle roof 1, the carriage element 8 has upwardly bent edge portions 14 which merge at their upper ends into the edge portions 9 guiding in the grooves 10. Hereby, the underside of the greater part of the carriage element 8 will lie approximately flush with the lower edges 12 of the side walls 11.

In order to permit operating the clamping portion 7, the carriage element 8 is provided with an upwardly directed lug 15 with an opening 16 for a bolt 17. The threaded shaft of the bolt 17 meshes with a backing flange 18 disposed interiorly in the load carrier foot 4, the flange thus being provided with a threaded bore whose longitudinal direction is parallel with the longitudinal direction of the grooves 10. The backing flange 18 is a downwardly extending portion which, interiorly in the load carrier foot, departs from that portion of the load carrier foot which supports the load carrier beam 3. The upper part of the backing flange has a suitable anchorage (not shown) for lockable securement of a cover which prevents unauthorized access to the bolt 17.

In order to prevent both side walls 11 of the load carrier foot 4 from being bent away from one another or otherwise deformed, they are mutually united in the region over the grooves 10 via an interconnecting bottom plate 19. this bottom plate is also connected with the lower end of the backing flange 18 so that this is prevented from being pivoted or bent outwards (away from the vehicle centre) on tightening of the bolt 17.

So as not to prevent the movements of the lug 15 on the carriage element 8, the bottom plate 19 has, at its outwardly facing edge, a recess 20 which extends into the outer side of the backing flange 18.

It was mentioned above that the carriage element 8 had arched edge portions 9 in guiding engagement with the grooves 10 so that thereby the carriage element 8 is, to some extent, pivotal about a substantially vertical axis. In order that this pivoting is not obstructed, the lug 15 is arched and concave on its outside. Between the head of the bolt 17 and the outside of the lug 15, there is provided a correspondingly arched washer which provides surface abutment against the lug even in oblique inclination of the carriage element 8.

It will be apparent from the above description that the carriage element 8 will be loaded not only with the entire loading from the load carrier beam 3 against the vehicle roof but also with the clamping force from the clamping portion 7. For this reason, the platformed carriage element 8 has reinforcement embossings whose approximate configuration is illustrated by means of the broken lines 22.

### DESCRIPTION OF ALTERNATIVE EMBODIMENTS

As one alternative to the guiding of the carriage element with the aid of the edge portions 9 of the carriage element and the grooves 10, a variation is conceivable in which the side walls 11 are vertical and approximately parallel with one another in their lower region. In such instance, the carriage element is designed as a U-shaped portion which is located in between the side walls 11 with its upwardly directed side shanks, while the trough of the U carries the clamping portion 7 and the support portion 6. On the outside of the side shanks of the carriage element and on the inside of the side walls 11, there are mutually cooperating guide grooves and beads whose longitudinal direction is directed obliquely inwards and upwards towards a line located a suitable height above the longitudinal centre line of the vehicle roof. The angle of inclination of these grooves and beads may be of the order of magnitude of 45°. The clamping arrangement which realizes tightening of the clamping portion 7 is suitably directed along these grooves and beads, but may also be pivotally secured in the load carrier foot and have its mean direction approximately vertical or horizontal.

In a design with such obliquely directed grooves and beads, a vertical loading on the load carrier beam 3 will entail an increase of the laterally directed clamping force from the clamping portions 7.

As yet a further variation, it is conceivable to dispense with the guide groove 10 on the inside of the side walls 11 and instead provide the carriage element 8 with an upwardly directed arm which is pivotally secured about a pivot axis parallel to the longitudinal direction of the vehicle in the upper portion of the load carrier foot 4. Such an anchorage of the carriage element 8 implies that this may execute a pendulum motion in towards the vehicle centre and out away therefrom. In this embodiment, the clamping arrangement suitably engages with the upwardly directed arm of the carriage element as close to the carriage element as possible.

The present invention may be modified further without departing from the scope of the appended Claims.

## Claims

1. A load carrier foot of the type which is intended to be secured at the side edge regions (1, 2) of the vehicle roof for mounting a load carrier (3) extending transversely across the roof comprising a support member (6) for abutment against the roof and a clamping member (7) for fixedly clamping the load carrier foot (4), said support member (6) and said clamping member (7) being provided on a carriage element (8) provided in the load carrier foot (4), said carriage element being movable in a clamping movement under influence of a clamping arrangement (15-18) toward a longitudinal center line of the vehicle, **characterized** in that, the carriage element (8) is in the form of a plate member which, with opposing edge portions (9) in its clamping movement, is displaceably guided in corresponding grooves (10) in the load carrier foot (4).

2. The load carrier foot as claimed in claim 1, **characterized** in that, the plate member, on the upper side thereof and in the mid-region between its guiding edge portions (9), has an upwardly projecting member for co-operating with the clamping arrangement (15-18).

3. The load carrier foot as claimed in claim 1 or 2, **characterized** in that, the guiding edge portions (9) of the plate member have a slight curvature (13) for allowing the plate member to be slightly rotated about an axis perpendicular to the plane of plate member.

4. The load carrier foot as claimed in any one of claims 1-3, **characterized** in that, the clamping arrangement (15-18) comprises a screw (17) received in a threaded bore in the load carrier foot (4), the longitudinal direction of the bore being substantially parallel with the guiding grooves (10) in the load carrier foot (4) and that the screw (17) extends through a hole (16) in the upwardly projecting member (15) of the plate member.

5. The load carrier foot as claimed in claim 4, **characterized** in that, the upwardly projecting member (15) of the plate member is arched in the region thereof co-operating with the screw (17) whereby the plate member is slightly rotational about an axis perpendicular to the plane of the plate member.

6. The load carrier foot as claimed in any one of claims 1-5, **characterized** in that, the clamping member (7) is a projection extending laterally out from the carriage element (8), the projection being bent downwards to form a hook shape in order to engage substantially laterally with a correspondingly shaped edge portion (2) of the vehicle roof.

7. The load carrier foot as claimed in any one of claims 1-6, **characterized** in that, in the region above the grooves (10), there is provided a bottom plate (19) connecting opposite side walls (11) of the load carrier foot.

8. The load carrier foot as claimed in claim 7, **characterized** in that, the bottom plate (19) is connected to a backing flange (18).

9. The load carrier foot as claimed in any one of claims 1-8, **characterized** in that, the direction of movement of the carriage element (8) is substantially parallel with a tangent to the vehicle roof in the region of the support member (6).

## Patentansprüche

1. Lastenträger-Fuß der Art, die bestimmt ist zur Befestigung an den Seitenrandbereichen (1, 2) des Fahrzeugdaches zum Befestigen eines Lastenträgers (3), der sich quer über das Dach erstreckt, mit einem Stützteil (6) zur Anlage am Dach sowie einem Klemmteil (7) zum Festklemmen des Lastenträger-Fußes (4), wobei das Stützteil (6) und das Klemmteil (7) an einem Schlittenelement (8) angeordnet sind, das im Lastenträger-Fuß (4) vorgesehen ist, wobei das Schlittenelement unter Einfluß einer Klemmanordnung (15-18) in Richtung auf eine Längsmittellinie des Fahrzeugs in einer Klemmbewegung beweglich ist, dadurch gekennzeichnet, daß das Schlittenelement (8) in Form eines Plattenteils ist, welches in seiner Klemmbewegung mit gegenüberliegenden Randabschnitten (9) in entsprechenden Nuten (10) in dem Lastenträger-Fuß (4) verschiebbar geführt ist.

2. Lastenträger-Fuß nach Anspruch 1, dadurch gekennzeichnet, daß das Plattenteil an seiner oberen Seite und im Mittelbereich zwischen seinen Führungsrandabschnitten (9) ein nach oben vorstehendes Teil zur Zusammenwirkung mit der Klemmanordnung (15-18) aufweist.

3. Lastenträger-Fuß nach Anspruch 1 oder 2, dadurch gekennzeichnet, daß die Führungsrandabschnitte (9) des Plattenteils eine leichte Krümmung (13) aufweisen, um es dem Plattenteil zu ermöglichen, daß es um eine zur Ebene des Plattenteils im rechten Winkel liegende Achse geringfügig rotiert wird.

4. Lastenträger-Fuß nach einem der Ansprüche 1 bis 3, dadurch gekennzeichnet, daß die Klemmanordnung (15-18) eine Schraube (17) aufweist, die in einer Gewindebohrung in dem Lastenträger-Fuß (4) aufgenommen ist, wobei die Längsrichtung der Bohrung im wesentlichen parallel zu den Führungsnuten (10) in dem Lastenträger-Fuß (4) ist, und daß sich die Schraube (17) durch ein Loch (16) in dem sich nach oben erstreckenden Teil (15) des Plattenteils erstreckt.

5. Lastenträger-Fuß nach Anspruch 4, dadurch gekennzeichnet, daß das nach oben vorstehende Teil (15) des Plattenteils in seinem Bereich, der mit der Schraube (17) zusammenwirkt, gebogen ist, wodurch das Plattenteil um eine Achse, die im rechten Winkel zur Ebene des Plattenteils liegt, geringfügig drehbar ist.

6. Lastenträger-Fuß nach einem der Ansprüche 1 bis 5, dadurch gekennzeichnet, daß das Klemmteil (7) ein Vorsprung ist, der sich seitlich aus dem Schlittenelement (8) erstreckt, wobei der Vorsprung nach unten gebogen ist, um eine Hakenform zu bilden, um im wesentlichen seitlich in einen entsprechend geformten Kantenabschnitt (2) des Fahrzeugdaches einzugreifen.

7. Lastenträger-Fuß nach einem der Ansprüche 1 bis 6, dadurch gekennzeichnet, daß im Bereich oberhalb der Nuten (10) eine Bodenplatte (19) vorgesehen ist, die gegenüberliegende Seitenwände (11) des Lastenträger-Fußes miteinander verbindet.

8. Lastenträger-Fuß nach Anspruch 7, dadurch gekennzeichnet, daß die Bodenplatte (19) mit einem Verstärkungsflansch (18) verbunden ist.

9. Lastenträger-Fuß nach einem der Ansprüche 1 bis 8, dadurch gekennzeichnet, daß die Bewegungsrichtung des Trägerelements (8) im wesentlichen parallel zu einer Tangente zum Fahrzeugdach im Bereich des Stützteils (6) ist.

## Revendications

1. Pied de porte-charge, du type qui est destiné à être fixé dans les régions de bord latéral (1, 2) du toit d'un véhicule pour monter un porte-charge (3) s'étendant transversalement à travers le toit, comprenant un élément support (6) pour buter contre le toit et un élément de serrage (7) pour serrer fixement le pied de porte-charge (4), ledit élément support (6) et ledit élément de serrage (7) étant prévus sur un élément chariot (8) prévu dans le pied de porte-charge (4), ledit élément chariot étant mobile dans un mouvement de serrage sous l'influence d'un système de serrage (15-18) en direction d'une ligne médiane longitudinale du véhicule, caractérisé en ce que l'élément chariot (8) est de la forme d'un élément en plaque qui, avec des parties de bord opposées (9), dans son mouvement de serrage, est guidé en déplacement dans des gorges correspondantes (10) dans le pied de porte-charge (4).

2. Pied de porte-charge selon la revendication 1, caractérisé en ce que l'élément en plaque, sur son côté supérieur et dans la région médiane entre ses parties de bord de guidage (9), a un élément en saillie vers le haut pour coopérer avec le système de serrage (15-18).

3. Pied de porte-charge selon la revendication 1 ou 2, caractérisé en ce que les parties de bord de guidage (9) de l'élément en plaque ont une légère courbure (13) pour permettre à l'élément en plaque d'être légèrement tourné autour d'un axe perpendiculaire au plan de l'élément en plaque.

4. Pied de porte-charge selon l'une quelconque des revendications 1 à 3, caractérisé en ce que le système de serrage (15-18) comprend une vis (17) logée dans un trou fileté dans le pied de porte-charge (4), la direction longitudinale du trou étant substantiellement parallèle aux gorges de guidage (10) dans le pied de porte-charge (4), et en ce que la vis (17) s'étend à travers un trou (16) dans l'élément en saillie vers le haut (15) de l'élément en plaque.

5. Pied de porte-charge selon la revendication 4, caractérisé en ce que l'élément en saillie vers le haut (15) de l'élément en plaque est arqué dans sa région coopérant avec la vis (17), de sorte que l'élément en plaque est légèrement rotatif autour d'un axe perpendiculaire au plan de l'élément en plaque.

6. Pied de porte-charge selon l'une quelconque des revendications 1 à 5, caractérisé en ce que l'élément de serrage (7) est une saillie s'étendant latéralement depuis l'élément chariot (8), la saillie étant courbée vers le bas pour former une silhouette de crochet afin de mettre en prise substantiellement latéralement une partie de bord de forme correspondante (2) du toit du véhicule.

7. Pied de porte-charge selon l'une quelconque des revendications 1 à 6, caractérisé en ce que, dans la région au-dessus des gorges (10), il est prévu une plaque de base (19) raccordant des parois latérales opposées (11) du pied de porte-charge.

8. Pied de porte-charge selon la revendication 7, caractérisé en ce que la plaque de base (19) est raccordée à une bride de renforcement (18).

9. Pied de porte-charge selon l'une quelconque des revendications 1 à 8, caractérisé en ce que la direction du mouvement de l'élément chariot (8) est substantiellement parallèle à une tangente au toit du véhicule dans la région de l'élément support (6).
